# EUROPEAN PATENT SPECIFICATION

(11) **EP 3 584 998 B1**
(45) Date of publication and mention of the grant of the patent: **17.03.2021**
(21) Application number: 18770216.2
(22) Date of filing: 27.02.2018
(51) Int. Cl.: H04L 12/24, G06F 9/455

(54) **METHOD FOR VIRTUAL MACHINE CAPACITY EXPANSION AND REDUCTION AND VIRTUAL MANAGEMENT DEVICE**
VERFAHREN ZUR ERWEITERUNG UND VERRINGERUNG DER KAPAZITÄT EINER VIRTUELLEN MASCHINE UND VIRTUELLE VERWALTUNGSVORRICHTUNG
PROCÉDÉ D'EXPANSION ET DE RÉDUCTION DE CAPACITÉ DE MACHINE VIRTUELLE ET DISPOSITIF DE GESTION VIRTUELLE

(30) Priority: 24.03.2017 CN 201710184109
(43) Date of publication of application: 25.12.2019
(73) Proprietor: Huawei Technologies Co., Ltd., Longgang District Shenzhen, Guangdong 518129 (CN)
(72) Inventor: ZHANG, Xiaowei, Shenzhen Guangdong 518129 (CN); ZHOU, Yan, Shenzhen Guangdong 518129 (CN); XIE, Ning, Shenzhen Guangdong 518129 (CN)
(74) Representative: Goddar, Heinz J.
(86) International application number: PCT/CN2018/077419
(87) International publication number: WO 2018/171392

(56) References cited:
- WO-A1-2015/126430
- WO-A1-2016/048430
- WO-A1-2016/155835
- CN-A- 105 103 507
- CN-A- 106 375 101
- CN-A- 106 506 186
- US-A1- 2015 378 765

## Description

### TECHNICAL FIELD

Embodiments of the present invention relate to the field of virtualization technologies, and in particular, to a virtual machine scaling method and a virtual management device.

### BACKGROUND

In network function virtualization (network function virtualization, NFV), a virtualization technology is used to implement a hardware function of a physical machine through software processing, so that service development and deployment of the physical machine no longer rely on dedicated hardware. For example, an NFV system may be created on the physical machine by using the virtualization technology. The system includes a virtualized network function (virtualized network function, VNF) node, and virtual machines (virtual machine, VM) are deployed for the VNF node based on an actual service requirement of the VNF node. Currently, the virtual machines deployed for the VNF node are added or deleted for scaling purposes. For example, when a service is busy, some VMs are created for use by the VNF node to relieve service pressure, or when a service is idle, some VMs are deleted to facilitate full utilization of a VM resource.

The VNF node needs to preempt a resource with other VNF nodes to create a virtual machine, and there is a very high probability that the resource preemption fails. In addition, a VM creation operation is complex. Consequently, there is a relatively high probability that the VM creation fails. After a VM is deleted, a problem of preempting the VM resource with other VNF nodes also exists when a VM needs to be applied for again to scale out the VNF node, and it is also possible that the VM fails to be obtained through application. In addition, during virtual machine creation, an application programming interface (application programming interface, API) needs to be invoked for a plurality of times to apply for a network adapter, a hard disk, a VM, and the like. A larger quantity of times of API invocation indicates a higher probability that a fault occurs. Consequently, the probability that the VM creation fails increases. Likewise, during virtual machine deletion, an API needs to be invoked for a plurality of times to delete a network adapter, a hard disk, a VM, and the like. Consequently, a probability that the VM deletion fails increases.

In conclusion, an existing scaling solution causes a relatively high probability of a VNF node scaling failure. Once scale-out fails, a service of the VNF node is affected. If scale-in fails, the VM resource is not properly used. Consequently, other VNF nodes that need to be scaled out fail to obtain virtual machines through application, and services of these nodes are affected. In conclusion, a service of the NFV system is affected in the prior art.

WO 2015/126430 A1 discloses a method for managing virtual network functions for a network. The method includes providing a virtual network function (VNF) including a number of virtual network function components (VNFCs) of a number of different types, each VNFC comprising a virtual machine (VM) executing application software. The method further includes creating for up to all VNFC types a number of deactivated VMs having application software, monitoring at least one performance level of the VNF, and scaling-out the VNF by activating a number of deactivated VMs of a number of VNFC types when the at least one performance level reaches a scale-out threshold.

WO 2016/155835 A1 discloses a technique for scaling an application with a set of one or more virtual machines. The technique may be performed during runtime of the application and responsive to a determination that a scaling operation is required for the application. That determination can be based on at least one first performance measurement result for the application. A method implementation of the technique comprises calculating a scaling magnitude for the required scaling operation taking into account at least one second performance measurement result for the application. The scaling magnitude is indicative of a resource quantity to be added to or removed from the application. The method further comprises triggering generation of a scaling request. The scaling request is directed at a scaling of the application on the basis of the calculated scaling magnitude.

### SUMMARY

This application provides a virtual machine scaling method and a virtual management device. After a VNF node is created, a virtual machine cluster is created for the VNF node. Then the VNF node may be scaled out by powering on a virtual machine in the virtual machine cluster, and the VNF node may be scaled in by powering off a virtual machine in the virtual machine cluster. It takes only one invocation of API to fulfil a power-on operation or a power-off operation on the virtual machine. This reduces a quantity of times of API invocation, and can avoid a case in which a VM resource fails to be preempted to create a virtual machine for a VNF node, reduce a probability of a VNF node scaling failure, and avoid impact of VNF node scaling on a service of an NFV system to some extent.

To achieve the foregoing objectives, the following technical solutions are used in this application:

According to a first aspect, a virtual machine scaling method is provided, including: creating, by a virtualized network function manager (virtualized network function manager, VNFM), a target virtualized network function (virtualized network function, VNF) node, and creating a virtual machine cluster for the target VNF node, where the virtual machine cluster includes Q virtual machines, and Q is an integer greater than or equal to 1; then receiving, by the VNFM, a virtual machine scaling request sent by a network function virtualization orchestrator (network function virtualization orchestrator, NFVO), where the request carries an identifier of the target VNF node, information about a target virtual machine, and a virtual machine status identifier, and the virtual machine status identifier is a power-on identifier or a power-off identifier; subsequently determining, by the VNFM, the virtual machine cluster of the target VNF node based on the identifier of the target VNF node, and further determining the target virtual machine in the virtual machine cluster based on the information about the target virtual machine; and finally setting, by the VNFM, a running status of the target virtual machine based on the virtual machine status identifier. Specifically, the target virtual machine is set to a power-on state if the virtual machine status identifier is a power-on identifier, so as to scale out the target VNF node, or the target virtual machine is set to a power-off state if the virtual machine status identifier is a power-off identifier, so as to scale in the target VNF node, after the VNFM sets the running status of the target virtual machine based on the virtual machine status identifier, the VNFM may further update the virtual machine cluster of the target VNF node, specifically including: if Q is less than a first threshold and P/Q is greater than a second threshold, creating, by the VNFM, M new virtual machines for the target VNF node, and adding the M virtual machines to the virtual machine cluster, where P is a quantity of virtual machines in a power-on state in the virtual machine cluster, and M is greater than or equal to 1 and less than or equal to a difference between the first threshold and Q: and adding, by the VNFM, the M virtual machines to the virtual machine cluster.

It can be learned that in this embodiment of the present invention, a virtual machine cluster is created in advance for a VNF node, and then a power-on operation or a power-off operation may be performed on a virtual machine in the virtual machine cluster of the VNF node to implement virtualized scaling. During scale-out, one or more virtual machines in a power-off state that are not used in the virtual machine cluster are powered on, and during scale-in, one or more virtual machines in a power-on state that are being used in the virtual machine cluster are powered off. In this way, no re-application of a virtual machine at an infrastructure layer is required. This avoids a VNF node scale-out failure caused when a virtual machine is applied for but a VM resource fails to be preempted. In addition, it takes only one invocation of API to fulfil a power-on operation or a power-off operation on the virtual machine. This reduces a quantity of times of API invocation, reduces a probability of a fault caused when API invocation is performed for a plurality of times to add or delete a VM, increases a probability of successful VNF node scaling, and avoids impact of a VNF node scaling failure on a service of an NFV system.

It should be noted that a person skilled in the art should understand that it is not necessary to perform, before each time of scale-out or scale-in, the first step in the foregoing method, that is, creating the target VNF node and creating the virtual machine cluster.

The first threshold herein may be a management capability upper limit of the target VNF node, namely, a maximum quantity of virtual machines that can be managed by the target VNF node. The second threshold may be a maximum upper limit of a proportion of running virtual machines, for example, 90%. In other words, when most virtual machines in the virtual machine cluster are running, M virtual machines may be added to the target VNF node, but the quantity of virtual machines in the virtual machine cluster after the addition cannot exceed the management capability upper limit of the target VNF node.

With reference to the first aspect, in a first possible implementation of the first aspect, if a VM resource is controlled by the VNFM, the setting, by the VNFM, a running status of the target virtual machine based on the virtual machine status identifier specifically includes: sending, by the VNFM, a virtual machine resource operation request message to the NFVO, where the virtual machine resource operation request message carries the information about the target virtual machine; receiving, by the VNFM, a virtual machine resource operation grant message sent by the NFVO, where the virtual machine operation grant message carries an acknowledgement identifier, for example, "yes", and the acknowledgement identifier is used to indicate that the VNFM has obtained permission to operate the target virtual machine; and subsequently sending, by the VNFM, a virtual machine operation instruction to a virtualized infrastructure manager VIM, to instruct the VIM to set the running status of the target virtual machine.

In this way, the VNFM can instruct the VIM to set the running status of the target virtual machine, including the power-on state and the power-off state, so as to scale out the target VNF node by setting the target virtual machine to the power-on state, or scale in the target VNF node by setting the target virtual machine to the power-off state.

With reference to the first aspect, in a second possible implementation of the first aspect, if a VM resource is controlled by the NFVO, the setting, by the VNFM, a running status of the target virtual machine based on the virtual machine status identifier specifically includes: sending, by the VNFM, a virtual machine operation instruction to the NFVO, so that the NFVO forwards the virtual machine operation instruction to a VIM, to instruct the VIM to set the running status of the target virtual machine.

In this way, the VNFM can instruct the NFVO to set the running status of the target virtual machine, including the power-on state and the power-off state, so as to scale out the target VNF node by setting the target virtual machine to the power-on state, or scale in the target VNF node by setting the target virtual machine to the power-off state.

With reference to any one of the first aspect, or the first to the second possible implementations of the first aspect, in a third possible implementation of the first aspect, the information about the target virtual machine includes one or both of a quantity of target virtual machines and an identifier of the target virtual machine.

In a specific implementation, if the information about the target virtual machine is the quantity of target virtual machines, for example, 2, and the virtual machine status identifier is a power-on state, the VNFM selects any two virtual machines in a power-off state from the virtual machine cluster of the target VNF node as target virtual machines. If the information about the target virtual machine is identifiers of target virtual machines, for example, a "virtual machine A" and a "virtual machine B", and the virtual machine status identifier is a power-on state, the VNFM determines the virtual machine A and the virtual machine B that are in a power-off state in the virtual machine cluster as target virtual machines.

With reference to any one of the first aspect, or the first to the third possible implementations of the first aspect, in a fourth possible implementation of the first aspect, before the receiving, by the VNFM, a virtual machine scaling instruction sent by the NFVO, the method further includes: receiving, by the VNFM, scaling mode indication information sent by the NFVO, where the scaling mode indication information is used to indicate that a scaling mode is powering on or off a virtual machine.

It should be noted that the scaling mode indication information may indicate a plurality of scaling modes, for example, adding or deleting a virtual machine or powering on or off a virtual machine. In this application, powering on or off a virtual machine is indicated.

With reference to any one of the first aspect, or the first to the fourth possible implementations of the first aspect, in a fifth possible implementation of the first aspect, after the setting, by the VNFM, the target virtual machine to a power-on state if the virtual machine status identifier is a power-on identifier, so as to scale out the target VNF node, the method further includes: configuring, by the VNFM, the target virtual machine based on a service requirement of the target VNF node.

According to a second aspect, a virtual management device is provided, including: a creation unit, configured to create a target VNF node, and create a virtual machine cluster for the target VNF node, where the virtual machine cluster includes Q virtual machines, and Q is an integer greater than or equal to 1; a receiving unit, configured to receive a virtual machine scaling request sent by an NFVO, where the virtual machine scaling request carries an identifier of the target VNF node, information about a target virtual machine, and a virtual machine status identifier, and the virtual machine status identifier is a power-on identifier or a power-off identifier; a determining unit, configured to: determine the virtual machine cluster of the target VNF node based on the identifier of the target VNF node, and determine the target virtual machine in the virtual machine cluster based on the information about the target virtual machine; and a setting unit, configured to set a running status of the target virtual machine based on the virtual machine status identifier, where the target virtual machine is set to a power-on state if the virtual machine status identifier is a power-on identifier, so as to scale out the target VNF node, or the target virtual machine is set to a power-off state if the virtual machine status identifier is a power-off identifier, so as to scale in the target VNF node, wherein the creation unit is further configured to: after the setting unit sets the running status of the target virtual machine based on the virtual machine status identifier, if Q is less than a first threshold and P/Q is greater than a second threshold, create M new virtual machines for the target VNF node, and add the M virtual machines to the virtual machine cluster, wherein P is a quantity of virtual machines in a power-on state in the virtual machine cluster, and M is greater than or equal to 1 and less than or equal to a difference between the first threshold and Q. It should be noted that the virtual management device may be the foregoing VNFM.

It can be learned that in this embodiment of the present invention, a virtual machine cluster is created in advance for a VNF node, and a power-on operation or a power-off operation is performed on a virtual machine in the virtual machine cluster to implement virtualized scaling. During scale-out, one or more virtual machines in a power-off state that are not used in the virtual machine cluster are powered on, and during scale-in, one or more virtual machines in a power-on state that are being used in the virtual machine cluster are powered off. In this way, no re-application of a virtual machine at an infrastructure layer is required. This avoids a VNF node scale-out failure caused when a virtual machine is applied for but a VM resource fails to be preempted. In addition, it takes only one invocation of API to fulfil a power-on operation or a power-off operation on the virtual machine. This reduces a quantity of times of API invocation, reduces a probability of a fault caused when API invocation is performed for a plurality of times to add or delete a VM, increases a probability of successful VNF node scaling, and avoids impact of a VNF node scaling failure on a service of an NFV system.

With reference to the second aspect, in a first possible implementation of the second aspect, the setting unit is specifically configured to: send a virtual machine resource operation request message to the NFVO; receive a virtual machine resource operation grant message sent by the NFVO; and send a virtual machine operation instruction to a virtualized infrastructure manager VIM, to instruct the VIM to set the running status of the target virtual machine.

With reference to the second aspect, in a second possible implementation of the second aspect, the setting unit is specifically configured to send a virtual machine operation instruction to the NFVO, so that the NFVO forwards the virtual machine operation instruction to a VIM, to instruct the VIM to set the running status of the target virtual machine.

With reference to any one of the second aspect, or the first to the second possible implementations of the second aspect, in a thirdpossible implementation of the second aspect, the information about the target virtual machine includes one or both of a quantity of target virtual machines and an identifier of the target virtual machine.

With reference to any one of the second aspect, or the first to the third possible implementations of the second aspect, in a fourth possible implementation of the second aspect, the receiving unit is further configured to: before a virtual machine scaling instruction sent by the NFVO is received, receive scaling mode indication information sent by the NFVO, where the scaling mode indication information is used to indicate that a scaling mode is powering on or off a virtual machine.

With reference to any one of the second aspect, or the first to the fourth possible implementations of the second aspect, in a fifth possible implementation of the second aspect, if the virtual machine status identifier is a power-on identifier, the virtual management device further includes a configuration unit, and the configuration unit is configured to: after the setting unit sets the target virtual machine to the power-on state, so as to scale out the target VNF node, configure the target virtual machine based on a service requirement of the target VNF node.

According to a third aspect, a virtual management device is provided. The virtual management device may include at least one processor, a memory, and a communications interface, and the at least one processor is connected to the memory and the communications interface. The memory is configured to store a computer executable instruction. The processor is configured to read the computer executable instruction stored in the memory to implement the virtual machine scaling method in any one of the first aspect or the possible implementations of the first aspect.

According to a fourth aspect, a computer storage medium is provided. The computer storage medium is configured to store a computer software instruction used by the foregoing virtual management device, and the computer software instruction includes a program designed for performing the foregoing virtual machine scaling method.

According to a fifth aspect, a computer program product including an instruction is provided. When the computer program product runs on a computer, the computer may execute a program designed for the virtual machine scaling method in any one of the first aspect or the possible implementations of the first aspect.

For beneficial effects of the virtual management device provided in the second aspect to the fourth aspect, refer to beneficial effects in the foregoing first aspect.

### BRIEF DESCRIPTION OF DRAWINGS

FIG. 1 is an architectural diagram of an existing NFV system;
FIG. 2 is a schematic diagram of an existing virtual machine creation process;
FIG. 3 is a schematic diagram of an existing virtual machine deletion process;
FIG. 4 is a schematic composition diagram of a virtual management device according to an embodiment of the present invention;
FIG. 5 is a schematic flowchart of a virtual machine scaling method according to an embodiment of the present invention;
FIG. 6 is a schematic diagram of an existing virtual machine creation procedure;
FIG. 7 is a schematic diagram of another existing virtual machine creation procedure;
FIG. 8A and FIG. 8B are a schematic flowchart of another virtual machine scaling method according to an embodiment of the present invention;
FIG. 9A and FIG. 9B are a schematic flowchart of another virtual machine scaling method according to an embodiment of the present invention;
FIG. 10 is another schematic composition diagram of a virtual management device according to an embodiment of the present invention; and
FIG. 11 is another schematic composition diagram of a virtual management device according to an embodiment of the present invention.

### DESCRIPTION OF EMBODIMENTS

The following describes the technical solutions in the embodiments of the present invention in detail with reference to the accompanying drawings in the embodiments of the present invention.

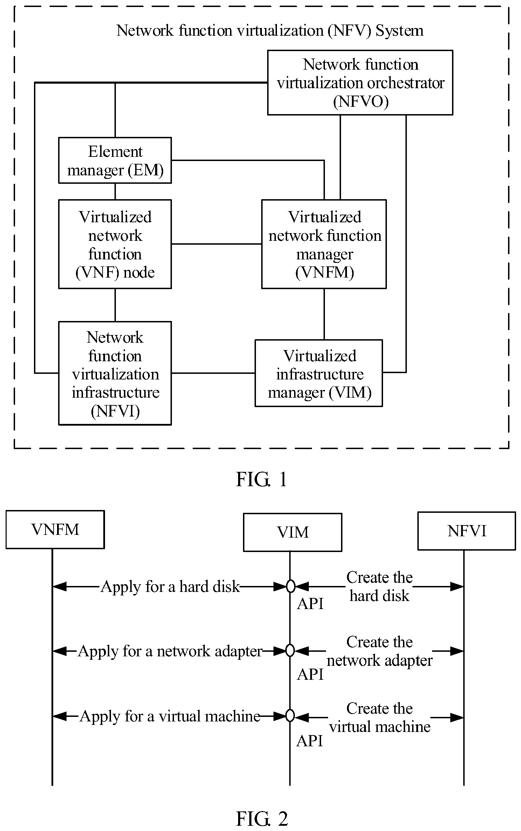

FIG. 1 is an architectural diagram of an NFV system. The NFV system includes function nodes such as an NFVO, a VNFM, a network function virtualization infrastructure (network function virtualization infrastructure, NFVI), a virtualized infrastructure manager (virtualized infrastructure manager, VIM), an element manager (element manager, EM), and a VNF node.

In the NFV system, the VNFM is responsible for life cycle management of the VNF node, for example, instantiation, scale-out/scale-in, query, update, and termination. The VIM is a management ingress of infrastructure and resources, and provides VM resource management for the VNF node. In addition, the NFVO may perform scheduling functions such as operation, management, and coordination on the VIM. All VIMs and VNFMs in the NFV system are connected to the NFVO.

Usually, scaling may be performed on the VNF node to adapt to different service requirements of the VNF node. For example, when a service of the VNF node is busy, the VNF node is scaled out to relieve service pressure of the VNF node; or when a service of the VNF node is idle, the VNF node is scaled in and some virtual machines are released for use by other VNF nodes, so that a virtual machine resource can be properly used. Specifically, increasing a quantity of virtual machines that are being used by the VNF node means scaling out the VNF node, and reducing the quantity of virtual machines that are being used by the VNF node means scaling in the VNF node.

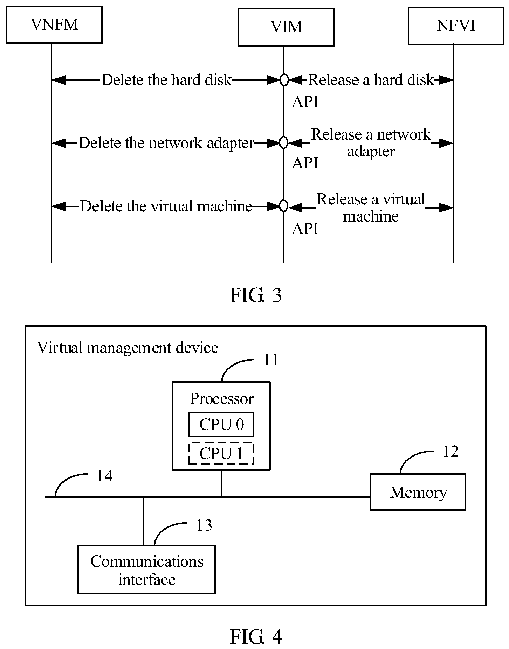

In the prior art, scaling is performed on the VNF node by adding or deleting a virtual machine. For example, some new virtual machines are created for the VNF node at an infrastructure layer when the service is busy; or some virtual machines of the VNF node are deleted when the service is idle. The VNF node needs to preempt the VM resource with other VNF nodes to create a virtual machine, and there is a very high probability that the VM resource preemption fails. In addition, a VM creation operation is complex. Consequently, there is also a relatively high probability that the VM creation fails. In addition, with reference to a virtual machine creation procedure shown in FIG. 2, the VNFM needs to invoke an API of the VIM for a plurality of times to complete the procedure, including invoking the APIs to apply for a network adapter, a hard disk, a VM, and the like. Likewise, referring to a virtual machine deletion procedure shown in FIG. 3, during virtual machine deletion, the VNFM also may invoke an API of the VIM for a plurality of times to delete a network adapter, a hard disk, a VM, and the like.

Usually, a larger quantity of times of API invocation indicates a higher probability that a fault occurs. A plurality of times of API invocation also increases a probability of a VM creation failure (or a VM deletion failure). It can be learned that an existing solution of performing scaling by adding or deleting a virtual machine causes a relatively high probability of a VNF node scaling failure. If the VNF node fails to be scaled out, the service of the VNF node is affected. If the VNF node fails to be scaled in, the VM resource is not properly used. Consequently, other VNF nodes that need to be scaled out fail to obtain virtual machines through application, and services of these nodes are affected. In conclusion, service stability of the NFV system is affected in the prior art.

An embodiment of the present invention provides a virtual machine scaling method, and a basic principle of the method is as follows: A virtual machine cluster is created in advance for a VNF node, and a power-on operation or a power-off operation is performed on a virtual machine in the virtual machine cluster to implement virtualized scaling. During scale-out, one or more virtual machines in a power-off state that are not used in the virtual machine cluster are powered on, and during scale-in, one or more virtual machines in a power-on state that are being used in the virtual machine cluster are powered off. In this way, no re-application of a virtual machine at an infrastructure layer is required. This avoids a VNF node scale-out failure caused when a virtual machine is applied for but a VM resource fails to be preempted. In addition, in this scaling mode, a power-on operation or a power-off operation is performed only on a virtual machine that has been obtained through application. Therefore, fast scaling of the VNF node can be ensured. In addition, it takes only one invocation of API to fulfil a power-on operation or a power-off operation on the virtual machine. This reduces a quantity of times of API invocation, reduces a probability of a fault caused when API invocation is performed a plurality of times to add or delete a VM, increases a probability of successful VNF node scaling, and avoids impact of a VNF node scaling failure on a service of an NFV system.

The following describes implementations of the embodiments of the present invention in detail with reference to the accompanying drawings.

FIG. 4 is a schematic composition diagram of a virtual management device according to an embodiment of the present invention. The virtual management device may be the VNFM in FIG. 1. As shown in FIG. 4, the virtual management device may include at least one processor 11, a memory 12, and a communications interface 13.

The following describes each constituent component of the virtual management device in detail with reference to FIG. 4.

The processor 11 is a control center of the virtual management device, and may be one processor or a collective name of a plurality of processing elements. For example, the processor 11 is a central processing unit (Central Processing Unit, CPU); or may be an application-specific integrated circuit (application-specific integrated circuit, ASIC), or one or more integrated circuits configured to implement this embodiment of the present invention, for example, one or more microprocessors (digital signal processor, DSP) or one or more field programmable gate arrays (field programmable gate array, FPGA).

The processor 11 may perform various functions of the virtual management device by running or executing a software program stored in the memory 12 and by invoking data stored in the memory 12.

In a specific implementation, in an embodiment, the processor 11 may include one or more CPUs, for example, a CPU 0 and a CPU 1 shown in FIG. 4.

In a specific implementation, in an embodiment, the virtual management device may include a plurality of processors, for example, the processor 11 and a processor 14 shown in FIG. 4. Each of the processors may be a single-core processor (single-CPU) or a multi-core processor (multi-CPU). The processor herein may be one or more devices, circuits, and/or processing cores configured to process data (such as a computer program instruction).

The memory 12 may be a read-only memory (read-only memory, ROM), a static storage device of another type that can store static information and an instruction, a random access memory (random access memory, RAM), or a dynamic storage device of another type that can store information and an instruction; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory 12 is not limited thereto. The memory 12 may exist independently, and is connected to the processor 11 by using a communications bus 14. Alternatively, the memory 12 may be integrated into the processor 11.

The memory 12 is configured to store a software program for executing the solutions in the present invention, and the software program is executed under control of the processor 11.

The communications interface 13 is configured to use any apparatus like a transceiver to communicate with another device in an NFV system, for example, the NFVO, the EM, or the VIM in FIG. 1. The communications interface 13 may be further configured to communicate with a communications network, such as the Ethernet, a radio access network (radio access network, RAN), or a wireless local area network (wireless local area network, WLAN). The communications interface 13 may include a receiving unit for implementing a receiving function and a sending unit for implementing a sending function.

A structure of the device shown in FIG. 4 does not constitute any limitation on the virtual management device, and the virtual management device may include more or fewer components than those shown in the figure, or combine some components, or have different component arrangements.

In some embodiments of the present invention, the processor 11 first creates a virtual machine cluster for a target VNF node, where the cluster includes Q virtual machines. Specifically, the processor 11 first needs to sequentially apply for Q virtual machines for the target VNF node. For a specific creation procedure, refer to FIG. 2. Details are not described herein again. After the virtual machine cluster is created, an identifier of the virtual machine cluster is bound to an identifier of the target VNF node. For example, a mapping relationship between the identifier of the target VNF node and the identifier of the virtual machine cluster is established.

Further, the processor 11 may set a virtual machine that is not currently used by the target VNF node in the virtual machine cluster to a power-off state, and set a virtual machine currently used by the target VNF node in the virtual machine cluster to a power-on state.

When a service of the target VNF node is busy, and virtual machines currently used by the target VNF node cannot support a service volume, an NFVO (or a device integrating an NFVO and an EM, or an EM) sends a virtual machine scaling request to the VNFM. The request carries the identifier of the target VNF node, information about a target virtual machine, and a virtual machine status identifier. The target virtual machine is one or more virtual machines in the virtual machine cluster of the target VNF node. The information about the target virtual machine may be a quantity of target virtual machines or an identifier of the target virtual machine. The virtual machine status identifier is a power-on identifier or a power-off identifier. The processor 11 receives the virtual machine scaling request through the communications interface 13.

Then the processor 11 determines the virtual machine cluster of the target VNF node based on the identifier of the target VNF node, and determines the target virtual machine in the virtual machine cluster based on the information about the target virtual machine. For example, if the information about the target virtual machine is the quantity of target virtual machines, for example, 2, and the virtual machine status identifier is PowerOnVMs, the processor 11 determines any two virtual machines in a power-off state in the virtual machine cluster as target virtual machines. If the information about the target virtual machine is identifiers of target virtual machines, for example, a "virtual machine A" and a "virtual machine B", and the virtual machine status identifier is PowerOnVMs, the processor 11 determines the virtual machine A and the virtual machine B that are in a power-off state in the virtual machine cluster as target virtual machines.

Subsequently, the processor 11 sets the target virtual machine to a power-on state based on the virtual machine status identifier, so as to scale out the target VNF node, or sets the target virtual machine to a power-off state based on the virtual machine status identifier, so as to scale in the target VNF node.

In a specific implementation, a VM resource may be controlled by the NFVO, or may be controlled by the VNFM. A procedure in which the processor 11 sets the target virtual machine to the power-on state or the power-off state based on the virtual machine status identifier varies with the two cases. Specifically, when the VM resource is controlled by the VNFM, after receiving the virtual machine scaling request through the communications interface 13, the processor 11 sends a virtual machine resource operation request message to the NFVO to apply for a grant to operate the VM resource. The processor 11 receives, through the communications interface 13, a virtual machine resource operation grant message returned by the NFVO, to obtain the grant from the NFVO. The processor 11 sends a virtual machine operation instruction to a VIM through the communications interface 13. The virtual machine operation instruction may carry the identifier of the target virtual machine and the virtual machine status identifier. Then the VIM performs a power-on operation or a power-off operation on the target virtual machine based on the virtual machine status identifier.

When the VM resource is controlled by the NFVO, after receiving the virtual machine scaling request through the communications interface 13, the processor 11 sends a virtual machine operation instruction to the NFVO. Likewise, the virtual machine operation instruction carries the identifier of the target virtual machine and the virtual machine status identifier. Then the NFVO forwards the virtual machine operation instruction to a VIM, and after receiving the virtual machine operation instruction, the VIM may perform a power-on operation or a power-off operation on the target virtual machine based on the virtual machine status identifier.

In some embodiments of the present invention, a configuration parameter of a target VNF node in the NFV system is configured in an NSD or a VNFD, and the configuration parameter includes parameters such as a quantity Q of virtual machines included in the virtual machine cluster of the target VNF node, and a management capability upper limit of the target VNF node. It should be noted that although the NSD and the VNFD are not shown in FIG. 1, the NFV system may include the NSD and the VNFD, and both the NSD and the VNFD have a connection relationship with the VNFM. In a specific implementation, Q may be the management capability upper limit (namely, a first threshold) of the target VNF node, namely, a maximum quantity of virtual machines that can be managed by the target VNF node. Alternatively, Q may be any integer greater than or equal to 1 and less than the management capability upper limit.

Further, when Q is greater than or equal to 1 and less than the management capability upper limit, the processor 11 may further periodically query for a ratio P/Q of a quantity P of used virtual machines (namely, a quantity of virtual machines in a power-on state) in the virtual machine cluster of the target VNF node to Q. If P/Q is greater than a second threshold, in other words, most virtual machines in the virtual machine cluster are running, the processor 11 may create M new virtual machines for the target VNF node, and add the M virtual machines to the virtual machine cluster of the target VNF node. It should be noted that M is greater than or equal to 1 and less than or equal to a difference between the first threshold and Q. In other words, the quantity of virtual machines in the virtual machine cluster cannot exceed the management capability upper limit of the target VNF node after the M virtual machines are added. Certainly, the configuration parameter of the target VNF node further includes the first threshold and the second threshold.

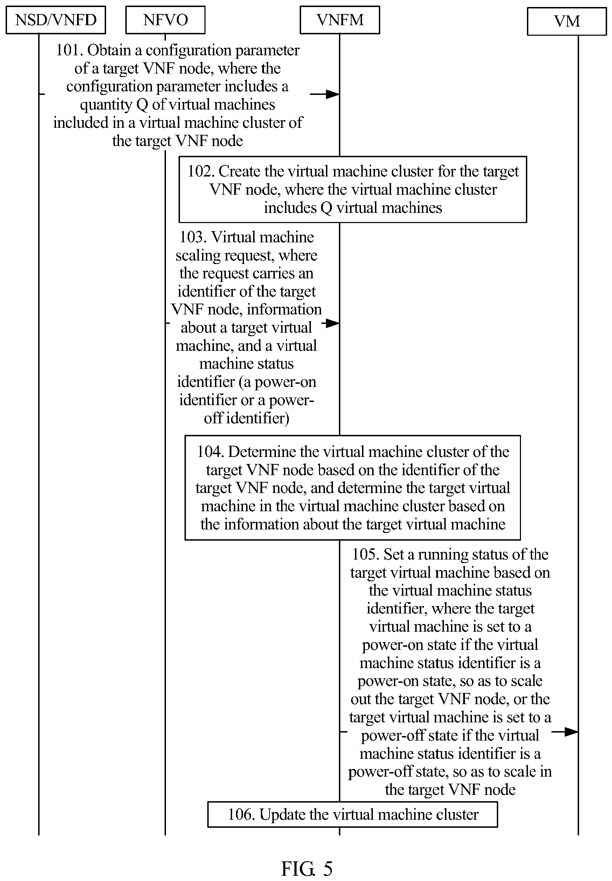

FIG. 5 is a flowchart of a virtual machine scaling method according to an embodiment of the present invention. As shown in FIG. 5, the method may include the following steps.

101. A VNFM obtains a configuration parameter of a target VNF node, where the configuration parameter includes a quantity Q of virtual machines included in a virtual machine cluster of the target VNF node.

In a specific implementation, before performing instantiation (in other words, creating the virtual machine cluster for the target VNF node), the VNFM first invokes a VNF interface of an NSD or a VNFD, to obtain the configuration parameter of the target VNF node through the interface. The configuration parameter may include the quantity Q of virtual machines included in the virtual machine cluster of the target VNF nod, a first threshold, a second threshold, and the like. The first threshold may be a management capability upper limit of the target VNF node, and the second threshold may be an upper limit of a proportion of virtual machines that are being used in the virtual machine cluster.

In a specific implementation, Q may be the management capability upper limit (namely, the first threshold) of the target VNF node, or may be any integer greater than or equal to 1 and less than the management capability upper limit.

102. The VNFM creates the virtual machine cluster for the target VNF node, where the virtual machine cluster includes Q virtual machines.

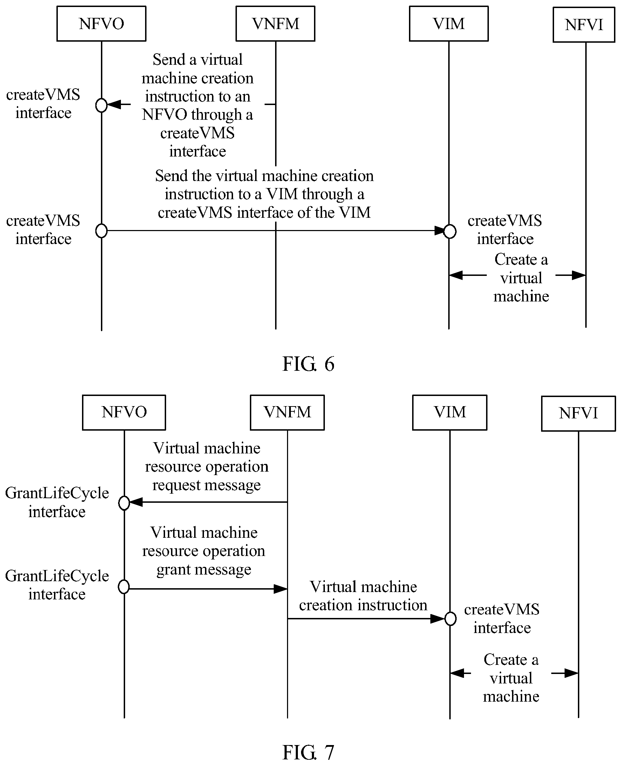

In a specific implementation, when a VM resource is controlled by an NFVO or is controlled by the VNFM, a procedure in which the VNFM creates a virtual machine for the target VNF node varies. For example, referring to FIG. 6, when the VM resource is controlled by the NFVO, and a virtual machine A is to be created, the VNFM invokes a createVMS interface of the NFVO to create the virtual machine. In other words, the VNFM sends a virtual machine creation instruction to the NFVO through the createVMS interface, and the instruction carries an identifier of the virtual machine A. Subsequently, the NFVO sends the virtual machine creation instruction to a VIM through a createVMS interface of the VIM, to instruct the VIM to create the virtual machine A. After receiving the instruction, the VIM creates the virtual machine A at an infrastructure layer NFVI.

Referring to FIG. 7, when the VM resource is controlled by the VNFM, and a virtual machine A is to be created, the VNFM first sends virtual machine resource operation request message to the NFVO. Specifically, the VNFM invokes a GrantLifeCycle interface of the NFVO to apply for a grant to operate the VM resource. In other words, the VNFM sends the virtual machine resource operation request message to the NFVO through the GrantLifeCycle interface of the NFVO. Subsequently, the NFVO sends a virtual machine resource operation grant message to the VNFM through the GrantLifeCycle interface. The VNFM then obtains the grant to operate the VM resource, and further sends a virtual machine creation instruction to a VIM through a createVMS interface of the VIM, to instruct the VIM to create the virtual machine A. After receiving the instruction, the VIM creates the virtual machine A at an infrastructure layer NFVI.

Further, after creating the Q virtual machines, the VNFM may set a virtual machine that needs to be used in the Q virtual machines to a power-on state, and set remaining virtual machines in the Q virtual machines to a power-off state.

103. The VNFM receives a virtual machine scaling request sent by the NFVO, where the virtual machine scaling request carries an identifier of the target VNF node, information about a target virtual machine, and a virtual machine status identifier, and the virtual machine status identifier is a power-on identifier or a power-off identifier.

It should be noted that the target virtual machine is one or more virtual machines in the virtual machine cluster of the target VNF node. In addition, the information about the target virtual machine may be a quantity of target virtual machines, for example, 2, or may be identifiers of target virtual machines, for example, a "virtual machine A" and a "virtual machine B". Alternatively, the information about the target virtual machine may be a quantity of target virtual machines and identifiers of target virtual machines. For example, there are three target virtual machines, and the three target virtual machines are a virtual machine A, a virtual machine B, and a virtual machine C.

104. The VNFM determines the virtual machine cluster of the target VNF node based on the identifier of the target VNF node, and determines the target virtual machine in the virtual machine cluster based on the information about the target virtual machine.

For example, if the information about the target virtual machine is the quantity of target virtual machines, for example, 2, and the virtual machine status identifier is PowerOnVMs, the VNFM determines any two virtual machines in a power-off state in the virtual machine cluster as target virtual machines, and may determine identifiers of the target virtual machines at the same time. If the information about the target virtual machine is identifiers of target virtual machines, for example, a "virtual machine A" and a "virtual machine B", and the virtual machine status identifier is PowerOnVMs, the VNFM determines the virtual machine A and the virtual machine B that are in a power-off state in the virtual machine cluster as target virtual machines.

105. The VNFM sets a running status of the target virtual machine based on the virtual machine status identifier, where the target virtual machine is set to a power-on state if the virtual machine status identifier is a power-on state, so as to scale out the target VNF node, or the target virtual machine is set to a power-off state if the virtual machine status identifier is a power-off state, so as to scale in the target VNF node.

Specifically, when the VM resource is controlled by the NFVO or is controlled by the VNFM, a procedure in which the VNFM powers on or off a virtual machine varies. When the VM resource is controlled by the VNFM, the VNFM receives the virtual machine scaling request sent by the NFVO, and the request carries the virtual machine status identifier (which may be a power-on identifier or a power-off identifier). Subsequently, the VNFM sends a virtual machine resource operation request message to the NFVO to apply for a grant to operate the VM resource, and receives a virtual machine resource operation grant message returned by the NFVO, to obtain the grant from the NFVO. Then the VNFM sends a virtual machine operation instruction to the VIM. The virtual machine operation instruction carries the identifier of the target virtual machine and the virtual machine status identifier. Then the VIM may perform a power-on operation or a power-off operation on the target virtual machine based on the virtual machine status identifier.

When the VM resource is controlled by the NFVO, after receiving the virtual machine scaling request sent by the NFVO, the VNFM sends a virtual machine operation instruction to the NFVO. Likewise, the virtual machine operation instruction carries the identifier of the target virtual machine and the virtual machine status identifier. Then the NFVO forwards the virtual machine operation instruction to the VIM, and after receiving the virtual machine operation instruction, the VIM may perform a power-on operation or a power-off operation on the target virtual machine based on the virtual machine status identifier.

Optionally, step 106 may be further performed after step 105.

106. The VNFM updates the virtual machine cluster.

When Q is greater than or equal to 1 and less than the management capability upper limit, the VNFM may further periodically query for a ratio P/Q of a quantity P of used virtual machines (namely, a quantity of virtual machines in a power-on state) in the virtual machine cluster of the target VNF node to Q. If P/Q is greater than the second threshold (for example, 90%), in other words, most virtual machines in the virtual machine cluster are running, the VNFM may create M new virtual machines for the target VNF node, and add the M virtual machines to the virtual machine cluster of the target VNF node.

It should be noted that M is greater than or equal to 1 and less than or equal to a difference between the first threshold and Q. In other words, the quantity of virtual machines in the virtual machine cluster cannot exceed the management capability upper limit of the target VNF node after the M virtual machines are added. Certainly, the configuration parameter of the target VNF node further includes the first threshold and the second threshold.

In some embodiments of the present invention, the VNFM may further provide a new interface such as a SetScalingType interface. Before step 101, the NFVO may send scaling mode indication information to the VNFM through the interface, to indicate a scaling mode. For example, the scaling mode indication information may be an indication field, and the NFVO sends a scaling mode indication field to the VNFM through the interface such as a SetScalingType interface, to indicate a scaling mode to the VNFM. For example, a field "0" is used to instruct the VNFM to perform scaling on the target VNF node by adding or deleting a virtual machine; and a field "1" is used to instruct the VNFM to perform scaling on the target VNF node by powering on or off a virtual machine. Certainly, in this embodiment, the scaling mode indication field is used to instruct the VNFM to perform scaling on the target VNF node by powering on or off a virtual machine.

According to the virtual machine scaling method provided in this embodiment of the present invention, a virtual machine cluster is created in advance for a VNF node, and a power-on operation or a power-off operation is performed on a virtual machine in the virtual machine cluster to implement virtualized scaling. In this way, no re-application of a virtual machine at an infrastructure layer is required. This avoids a VNF node scale-out failure caused when a virtual machine is applied for but a VM resource fails to be preempted. In addition, in this scaling mode, a power-on operation or a power-off operation is performed only on a virtual machine that has been obtained through application. Therefore, fast scaling of the VNF node can be ensured. In addition, it takes only one invocation of API to fulfil a power-on operation or a power-off operation on the virtual machine. This reduces a quantity of times of API invocation, reduces a probability of a fault caused when API invocation is performed a plurality of times to add or delete a VM, increases a probability of successful VNF node scaling, and avoid impact of VNF node scaling on a service of an NFV system.

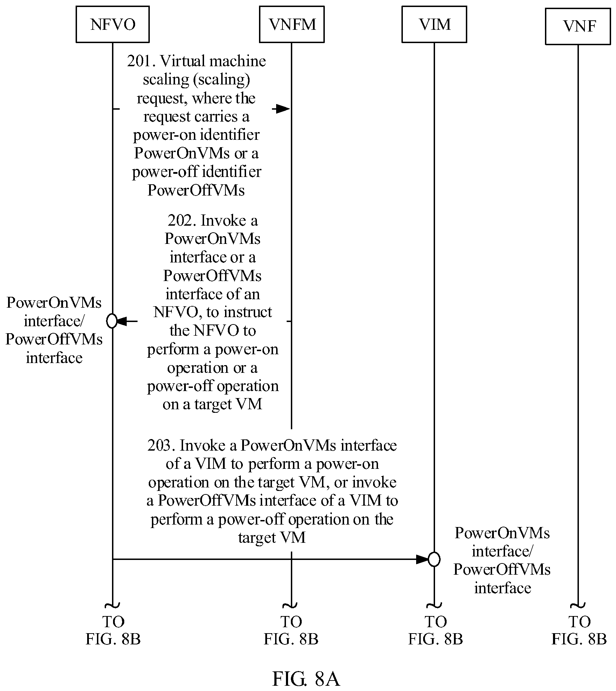

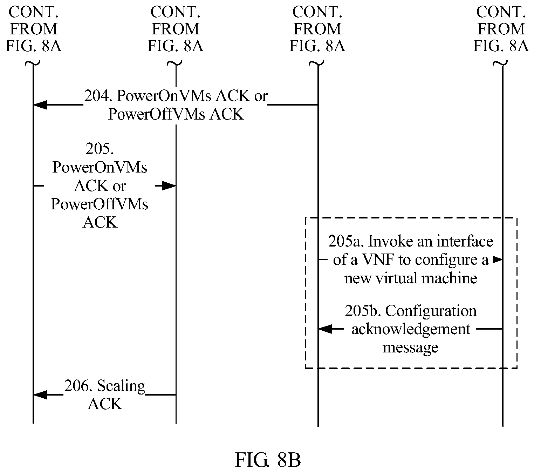

In some embodiments of the present invention, a VM resource is controlled by an NFVO. Based on this, an embodiment of the present invention provides a virtual machine scaling method. As shown in FIG. 8A and FIG. 8B, the method may include the following steps.

201. The NFVO (or a device integrating an EM and an NFVO, or an EM) initiates a virtual machine scaling request to a VNFM, where the request carries an identifier of a target VNF node, an identifier of a target VM, and a virtual machine status identifier (a power-on identifier PowerOnVMs or a power-off identifier PowerOffVMs).

The target VM herein is one or more virtual machines in a virtual machine cluster of the target VNF node. In a specific implementation, the EM/the NFVO invokes a scaling interface of the VNFM to initiate the virtual machine scaling request to the VNFM.

202. The VNFM invokes a PowerOnVMs interface or a PowerOffVMs interface of the NFVO, to instruct the NFVO to perform a power-on operation or a power-off operation on the target VM.

In a specific implementation, the VNFM first determines the virtual machine cluster of the target VNF node based on the identifier of the node, and then determines the target virtual machine in the virtual machine cluster based on the information about the target virtual machine. Then the VNFM may invoke the PowerOnVMs interface or the PowerOffVMs interface of the NFVO to perform a power-on operation or a power-off operation on each target VM.

For example, the VNFM may send the power-on identifier PowerOnVMs and the identifier of the target VM to the NFVO through the PowerOnVMs interface of the NFVO. Alternatively, the VNFM sends the power-off identifier PowerOffVMs and the identifier of the target VM to the NFVO through the PowerOffVMs interface of the NFVO.

203. The NFVO invokes a PowerOnVMs interface of a VIM to perform a power-on operation on the target VM, or invokes a PowerOffVMs interface of a VIM to perform a power-off operation on the target VM.

In a specific implementation, the NFVO may send the power-on identifier PowerOnVMs and the identifier of the target VM to the VIM through the PowerOnVMs interface of the VIM, so that the VIM performs a power-on operation on the target VM. Alternatively, the NFVO sends the power-off identifier PowerOffVMs and the identifier of the target VM to the VIM through the PowerOffVMs interface of the VIM, so that the VIM performs a power-off operation on the target VM.

204. The VIM returns a power-on operation acknowledgement message PowerOnVMs ACK (Acknowledgement) or a power-off operation acknowledgement message PowerOffVMs ACK to the NFVO.

The power-on operation acknowledgement message PowerOnVMs ACK is used to notify the NFVO that a power-on operation has been performed on the target virtual machine. The power-off operation acknowledgement message PowerOffVMs ACK is used to notify the NFVO that a power-off operation has been performed on the target virtual machine.

205. The NFVO forwards the PowerOnVMs ACK or the PowerOffVMs ACK to the VNFM.

206. The VNFM sends a scaling acknowledgement message scaling ACK to the NFVO.

The scaling ACK is used to notify the NFVO that a scale-out operation or a scale-in operation has been performed on the target VNF node.

If the NFVO requests to scale out the target VNF node, steps 205a and 205b may be further performed between step 205 and step 206.

205a. The VNFM invokes an interface of a VNF instance to configure a new virtual machine.

205b. The VNFM receives a configuration acknowledgement message returned by the VNF instance.

It should be noted that the VNFM may further develop an interface such as a SetScalingType interface, and the NFVO invokes this interface of the VNFM to instruct the VNFM to perform scaling on the target VNF node by adding or deleting a virtual machine, or to perform scaling on the target VNF node by powering on or off a virtual machine.

Optionally, before step 201, the NFVO may further send a scaling mode indication field to the VNFM through the interface similar to the SetScalingType interface, to indicate a scaling mode to the VNFM. For example, a field "0" is used to instruct the VNFM to perform scaling on the target VNF node by adding or deleting a virtual machine; and a field "1" is used to instruct the VNFM to perform scaling on the target VNF node by powering on or off a virtual machine. Certainly, in step 201 in this embodiment, the scaling mode indication field is used to instruct the VNFM to perform scaling on the target VNF node by powering on or off a virtual machine.

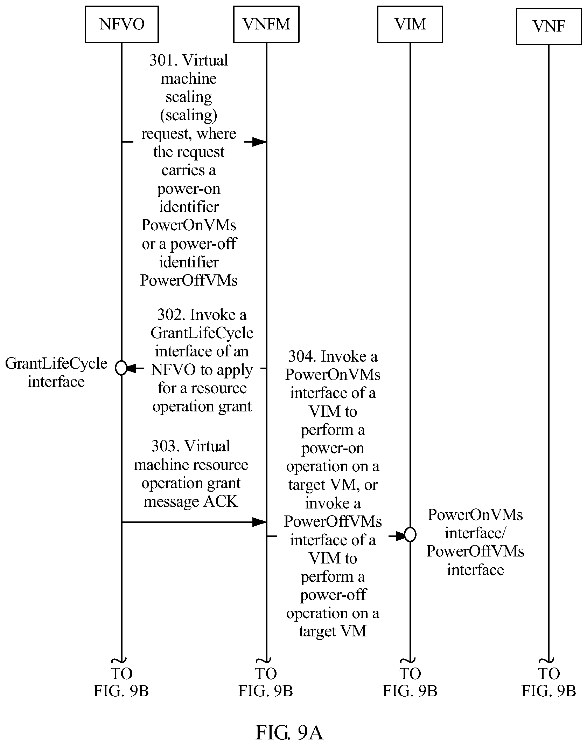

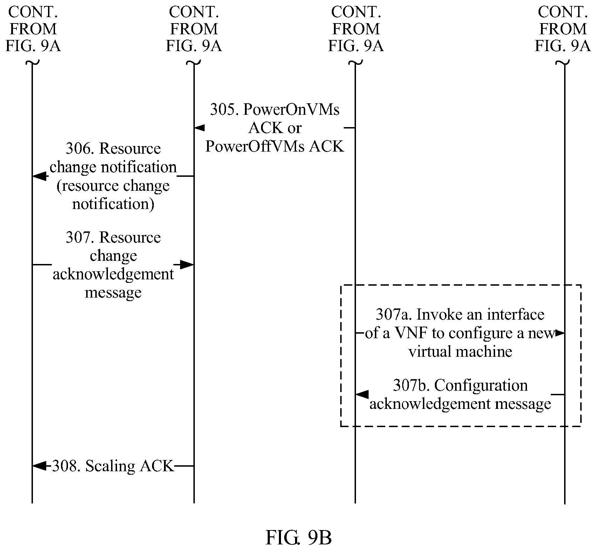

In some embodiments of the present invention, a VM resource is controlled by a VNFM. Based on this, an embodiment of the present invention provides a virtual machine scaling method. As shown in FIG. 9A and FIG. 9B, the method may include the following steps.

301. An NFVO (or a device integrating an EM and an NFVO, or an EM) initiates a virtual machine scaling request to a VNFM, where the request carries an identifier of a target VM and a virtual machine status identifier (a power-on identifier PowerOnVMs or a power-off identifier PowerOffVMs).

The target VM herein is one or more virtual machines in a virtual machine cluster of the target VNF node. In a specific implementation, the EM/the NFVO invokes a scaling interface of the VNFM to initiate the virtual machine scaling request to the VNFM.

302. The VNFM invokes a GrantLifeCycle interface of the NFVO to apply for a resource operation grant.

Specifically, the VNFM sends a virtual machine resource operation request message to the NFVO through the GrantLifeCycle interface of the NFVO.

303. The VNFM receives a virtual machine resource operation grant message sent by the NFVO.

304. After obtaining the grant from the NFVO, the VNFM invokes a PowerOnVMs interface of a VIM to perform a power-on operation on the target VM, or invokes a PowerOffVMs interface of a VIM to perform a power-off operation on the target VM.

In a specific implementation, the VNFM first determines the virtual machine cluster of the target VNF node based on the identifier of the node, and then determines the target virtual machine in the virtual machine cluster based on the information about the target virtual machine. Then the VNFM may invoke the PowerOnVMs interface or the PowerOffVMs interface of the VIM to perform a power-on operation or a power-off operation on the target VM.

For example, the VNFM may send the power-on identifier PowerOnVMs and the identifier of the target VM to the VIM through the PowerOnVMs interface of the VIM, so that the VIM performs a power-on operation on the target VM. Alternatively, the VNFM sends the power-off identifier PowerOffVMs and the identifier of the target VM to the VIM through the PowerOffVMs interface of the VIM, so that the VIM performs a power-off operation on the target VM.

305. The VIM returns a power-on operation acknowledgement message PowerOnVMs ACK or a power-off operation acknowledgement message PowerOffVMs ACK to the VNFM.

The power-on operation acknowledgement message PowerOnVMs ACK is used to notify the NFVO that a power-on operation has been performed on the target virtual machine. The power-off operation acknowledgement message PowerOffVMs ACK is used to notify the NFVO that a power-off operation has been performed on the target virtual machine.

306. The VNFM sends a resource change notification (resource change notification) to the NFVO.

307. The NFVO returns a resource change acknowledgement message to the VNFM.

308. The VNFM sends a scaling acknowledgement message scaling ACK to the NFVO.

The scaling acknowledgement message scaling ACK is used to notify the NFVO that a scale-out operation or a scale-in operation has been performed on the target VNF node.

If the NFVO requests to scale out the target VNF node, steps 307a and 307b may be further performed between step 307 and step 308.

307a. The VNFM invokes an interface of a VNF instance to configure a new virtual machine.

307b. The VNFM receives a configuration acknowledgement message returned by the VNF instance.

It should be noted that the VNFM may further develop an interface similar to a SetScalingType interface, and the NFVO invokes this interface of the VNFM to instruct the VNFM to perform scaling on the target VNF node by adding or deleting a virtual machine, or to perform scaling on the target VNF node by powering on or off a virtual machine. Certainly, in this embodiment, the NFVO invokes this interface of the VNFM to instruct the VNFM to perform scaling on the target VNF node by powering on or off a virtual machine.

Optionally, before step 301, the NFVO may further send a scaling mode indication field to the VNFM through the interface such as a SetScalingType interface, to indicate a scaling mode to the VNFM. For example, a field "0" is used to instruct the VNFM to perform scaling on the target VNF node by adding or deleting a virtual machine; and a field "1" is used to instruct the VNFM to perform scaling on the target VNF node by powering on or off a virtual machine. Certainly, in step 301 in this embodiment, the scaling mode indication field is used to instruct the VNFM to perform scaling on the target VNF node by powering on or off a virtual machine.

The solutions provided in the embodiments of the present invention are mainly described above from a perspective of interaction between network elements. It may be understood that to implement the foregoing functions, each network element such as the virtual management device includes a corresponding hardware structure and/or software module for performing each function. A person of skilled in the art should be easily aware that the algorithm steps in the examples described with reference to the embodiments disclosed in this specification can be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, the virtual management device may be divided into function modules based on the foregoing method example. For example, each function module may be obtained through division based on each corresponding function, or two or more functions may be integrated into one processing module. The integrated module may be implemented in a form of hardware, or may be implemented in a form of a software function module. It should be noted that the module division in the embodiments of the present invention is an example, and is merely logical function division, and may be other division in an actual implementation.

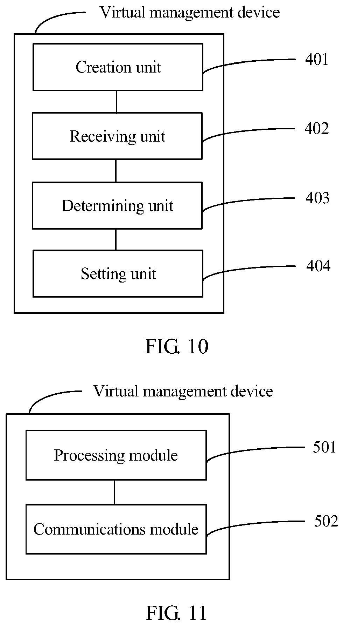

When each function module is obtained through division based on a corresponding function, FIG. 10 is a possible schematic composition diagram of the virtual management device in the foregoing embodiments. As shown in the figure, the virtual management device may include a creation unit 401, a receiving unit 402, a determining unit 403, and a setting unit 404.

The creation unit 401 is configured to support the virtual management device in performing step 102 in the virtual machine scaling method shown in FIG. 5.

The receiving unit 402 is configured to support the virtual management device in performing step 101 and step 103 in the virtual machine scaling method shown in FIG. 5, step 201 and step 205 in the virtual machine scaling method shown in FIG. 8A and FIG. 8B, and step 301, step 303, and step 307 in the virtual machine scaling method shown in FIG. 9A and FIG. 9B.

The determining unit 403 is configured to support the virtual management device in performing step 104 in the virtual machine scaling method shown in FIG. 5.

The setting unit 404 is configured to support the virtual management device in performing step 105 in the virtual machine scaling method shown in FIG. 5, step 202 in the virtual machine scaling method shown in FIG. 8A and FIG. 8B, and steps 302 to 304 in the virtual machine scaling method shown in FIG. 9A and FIG. 9B.

When an integrated unit is used, FIG. 11 is another possible schematic composition diagram of the virtual management device in the foregoing embodiments. As shown in FIG. 11, the virtual management device includes a processing module 501 and a communications module 502.

The processing module 501 is configured to control and manage an action of the virtual management device. For example, the processing module 501 is configured to support the virtual management device in performing step 102 and steps 104 to 106 in FIG. 5, step 202 in FIG. 8A, steps 302 and 304 in FIG. 9A, and/or is configured to perform another process of the technology described in this specification. The communications module 502 is configured to support the virtual management device in communicating with another network entity, for example, communicating with a function module or a network entity shown in FIG. 1. The virtual management device may further include a storage module 503, configured to store program code and data of the virtual management device.

The processing module 501 may be a processor or a controller. The controller/processor may implement or execute various examples of logical blocks, modules, and circuits described with reference to content disclosed in the present invention. Alternatively, the processor may be a combination that implements a computing function, for example, a combination of one or more microprocessors or a combination of a DSP and a microprocessor. The communications module 502 may be a transceiver, a transceiver circuit, a communications interface, or the like. The storage module 503 may be a memory.

When the processing module 501 is a processor, the communications module 502 is a communications interface, and the storage module 503 is a memory, the virtual management device in this embodiment of the present invention may be the virtual management device shown in FIG. 4.

Because the virtual management device provided in the embodiments of this application may be configured to perform the foregoing virtual machine scaling method, for technical effects that can be obtained by the virtual management device, refer to the foregoing method embodiments. Details are not described herein again in the embodiments of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave, or the like) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions about implementations allow a person skilled in the art to understand that for the purpose of convenient and brief description, division of the foregoing function modules is taken as an example for illustration. In actual application, the foregoing functions can be allocated to different modules and implemented based on a requirement, in other words, an inner structure of an apparatus is divided into different function modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

## Claims

1. A virtual machine scaling method, comprising:
creating (102), by a virtualized network function manager, VNFM, a target virtualized network function, VNF node, and creating a virtual machine cluster for the target VNF node, wherein the virtual machine cluster comprises Q virtual machines, and Q is an integer greater than or equal to 1;
receiving, by the VNFM, a virtual machine scaling request sent by a network function virtualization orchestrator, NFVO, wherein the virtual machine scaling request carries an identifier of the target VNF node, information about a target virtual machine, and a virtual machine status identifier, and the virtual machine status identifier is a power-on identifier or a power-off identifier;
determining (104), by the VNFM, the virtual machine cluster of the target VNF node based on the identifier of the target VNF node, and determining the target virtual machine in the virtual machine cluster based on the information about the target virtual machine; and
setting (105), by the VNFM, a running status of the target virtual machine based on the virtual machine status identifier, wherein the target virtual machine is set to a power-on state if the virtual machine status identifier is a power-on identifier, so as to scale out the target VNF node, or the target virtual machine is set to a power-off state if the virtual machine status identifier is a power-off identifier, so as to scale in the target VNF node,
wherein after the setting (105), by the VNFM, a running status of the target virtual machine based on the virtual machine status identifier, the method further comprises:
if Q is less than a first threshold and P/Q is greater than a second threshold, creating, by the VNFM, M new virtual machines for the target VNF node, wherein P is a quantity of virtual machines in a power-on state in the virtual machine cluster, and M is greater than or equal to 1 and less than or equal to a difference between the first threshold and Q; and
adding, by the VNFM, the M virtual machines to the virtual machine cluster.

2. The method according to claim 1, wherein the setting (105), by the VNFM, a running status of the target virtual machine based on the virtual machine status identifier comprises:
sending, by the VNFM, a virtual machine resource operation request message to the NFVO, wherein the virtual machine resource operation request message carries the information about the target virtual machine;
receiving, by the VNFM, a virtual machine resource operation grant message sent by the NFVO, wherein the virtual machine resource operation grant message carries an acknowledgement identifier, and the acknowledgement identifier is used to indicate that the VNFM has obtained permission to operate the target virtual machine; and
sending, by the VNFM, a virtual machine operation instruction to a virtualized infrastructure manager, VIM, to instruct the VIM to set the running status of the target virtual machine.

3. The method according to claim 1, wherein the setting (105), by the VNFM, a running status of the target virtual machine based on the virtual machine status identifier comprises:
sending, by the VNFM, a virtual machine operation instruction to the NFVO, so that the NFVO forwards the virtual machine operation instruction to a VIM, to instruct the VIM to set the running status of the target virtual machine.

4. The method according to any one of claims 1 to 3, wherein the information about the target virtual machine comprises one or both of a quantity of target virtual machines and an identifier of the target virtual machine.

5. The method according to any one of claims 1 to 4, wherein before the receiving, by the VNFM, a virtual machine scaling request sent by the NFVO, the method further comprises:
receiving, by the VNFM, scaling mode indication information sent by the NFVO, wherein the scaling mode indication information is used to indicate that a scaling mode is powering on or off a virtual machine.

6. A virtual management device, comprising:
a creation unit (401), configured to: create a target virtualized network function, VNF node, and create a virtual machine cluster for the target VNF node, wherein the virtual machine cluster comprises Q virtual machines, and Q is an integer greater than or equal to 1;
a receiving unit (402), configured to receive a virtual machine scaling request sent by a network function virtualization orchestrator, NFVO, wherein the virtual machine scaling request carries an identifier of the target VNF node, information about a target virtual machine, and a virtual machine status identifier, and the virtual machine status identifier is a power-on identifier or a power-off identifier; a determining unit (403), configured to: determine the virtual machine cluster of the target VNF node based on the identifier of the target VNF node, and determine the target virtual machine in the virtual machine cluster based on the information about the target virtual machine; and
a setting unit (404), configured to set a running status of the target virtual machine based on the virtual machine status identifier, wherein the target virtual machine is set to a power-on state if the virtual machine status identifier is a power-on identifier, so as to scale out the target VNF node, or the target virtual machine is set to a power-off state if the virtual machine status identifier is a power-off identifier, so as to scale in the target VNF node,
wherein the creation unit (401) is further configured to: after the setting unit (404) sets the running status of the target virtual machine based on the virtual machine status identifier, if Q is less than a first threshold and P/Q is greater than a second threshold, create M new virtual machines for the target VNF node, and add the M virtual machines to the virtual machine cluster, wherein
P is a quantity of virtual machines in a power-on state in the virtual machine cluster, and M is greater than or equal to 1 and less than or equal to a difference between the first threshold and Q.

7. The virtual management device according to claim 6, wherein the setting unit (404) is specifically configured to: send a virtual machine resource operation request message to the NFVO, wherein the virtual machine resource operation request message carries the information about the target virtual machine; receive a virtual machine resource operation grant message sent by the NFVO, wherein the virtual machine operation grant message carries an acknowledgement identifier, and the acknowledgement identifier is used to indicate that the VNFM has obtained permission to operate the target virtual machine; and send a virtual machine operation instruction to a virtualized infrastructure manager, VIM, to instruct the VIM to set the running status of the target virtual machine.

8. The virtual management device according to claim 6, wherein the setting unit (404) is specifically configured to send a virtual machine operation instruction to the NFVO, so that the NFVO forwards the virtual machine operation instruction to a VIM, to instruct the VIM to set the running status of the target virtual machine.

9. The virtual management device according to any one of claims 6 to 8, wherein the information about the target virtual machine comprises one or both of a quantity of target virtual machines and an identifier of the target virtual machine.

10. The virtual management device according to any one of claims 6 to 9, wherein the receiving unit (402) is further configured to: before a virtual machine scaling request sent by the NFVO is received, receive scaling mode indication information, wherein the scaling mode indication information is used to indicate that a scaling mode is powering on or off a virtual machine.

11. The virtual management device according to any one of claims 6 to 10, wherein the virtual management device may comprise at least one processor (11, 14), a memory (12), and a communications interface (13), and the at least one processor is connected to the memory and the communications interface;
the memory (12) is configured to store a computer executable instruction; and the processor (11, 14) is configured to read the computer executable instruction to implement the virtual machine scaling method according to any one of claims 1 to 5.

## Patentansprüche

1. Skalierungsverfahren für virtuelle Maschinen, das Folgendes umfasst:
Erstellen (102), durch einen virtualisierten Netzwerkfunktionsmanager (*virtualized network function manager-* VNFM), eines virtuellen Zielnetzwerkfunktions(*virtualized network function* - VNF)-Knotens, und Erstellen eines virtuellen Maschinen-Clusters für den Ziel-VNF-Knoten, wobei der virtuelle Maschinen-Cluster Q virtuelle Maschinen umfasst und Q eine ganze Zahl größer als oder gleich 1 ist;
Empfangen, durch den VNFM, einer Skalierungsanforderung für virtuelle Maschinen, die durch einen Netzwerkfunktionsvirtualisierungsorchestrator (*network function virtualization orchestrator-* NFVO) gesendet wird, wobei die Skalierungsanforderung für virtuelle Maschinen eine Kennung des Ziel-VNF-Knotens, Informationen über eine virtuelle Zielmaschine und eine Statuskennung der virtuellen Maschine trägt, und die Statuskennung der virtuellen Maschine eine Einschaltkennung oder eine Ausschaltkennung ist;
Bestimmen (104), durch den VNFM, des virtuellen Maschinen-Clusters des Ziel-VNF-Knotens basierend auf der Kennung des Ziel-VNF-Knotens und Bestimmen der virtuellen Zielmaschine in dem virtuellen Maschinen-Cluster basierend auf den Informationen über die virtuelle Zielmaschine; und
Einstellen (105), durch den VNFM, eines Laufstatus der virtuellen Zielmaschine basierend auf der Statuskennung der virtuellen Maschine, wobei die virtuelle Zielmaschine auf einen Einschaltzustand gesetzt wird, wenn die Statuskennung der virtuellen Maschine eine Einschaltkennung ist, so dass der Ziel-VNF-Knoten aufskaliert wird, oder die virtuelle Zielmaschine in einen Ausschaltzustand gesetzt wird, wenn die Statuskennung der virtuellen Maschine eine Ausschaltkennung ist, so dass der Ziel-VNF-Knoten abskaliert wird, wobei nach dem Einstellen (105), durch den VNFM, eines Laufstatus der virtuellen Zielmaschine basierend auf der Statuskennung der virtuellen Maschine, das Verfahren ferner Folgendes umfasst:
wenn Q kleiner als ein erster Schwellenwert und P/Q größer als ein zweiter Schwellenwert ist, Erstellen, durch den VNFM, von M neuen virtuellen Maschinen für den Ziel-VNF-Knoten, wobei P eine Anzahl von virtuellen Maschinen in einem Einschaltzustand in dem virtuellen Maschinen-Cluster ist und M größer als oder gleich 1 und kleiner als oder gleich einer Differenz zwischen dem ersten Schwellenwert und Q ist; und
Hinzufügen, durch den VNFM, der M virtuellen Maschinen zu dem virtuellen Maschinen-Cluster.

2. Verfahren nach Anspruch 1, wobei das Einstellen (105), durch den VNFM, eines Betriebszustands der virtuellen Zielmaschine basierend auf der Statuskennung der virtuellen Maschine Folgendes umfasst:
Senden, durch den VNFM, einer Anforderungsnachricht für den Ressourcenvorgang der virtuellen Maschine an den NFVO, wobei die Anforderungsnachricht für den Ressourcenvorgang der virtuellen Maschine die Informationen über die virtuelle Zielmaschine trägt;
Empfangen, durch den VNFM, einer durch den NFVO gesendeten Zuweisungsnachricht für den Ressourcenvorgang der virtuellen Maschine, wobei die Zuweisungsnachricht für den Ressourcenvorgang der virtuellen Maschine eine Bestätigungskennung trägt und die Bestätigungskennung verwendet wird, um anzuzeigen, dass der VNFM eine Erlaubnis zum Betrieb der virtuellen Zielmaschine erhalten hat; und
Senden, durch den VNFM, einer Betriebsanweisung der virtuellen Maschine an einen virtualisierten Infrastrukturmanager (*virtualized infrastructure manager* - VIM), um den VIM anzuweisen, den Laufstatus der virtuellen Zielmaschine einzustellen.

3. Verfahren nach Anspruch 1, wobei das Einstellen (105), durch den VNFM, eines Laufstatus der virtuellen Zielmaschine basierend auf der Statuskennung der virtuellen Maschine Folgendes umfasst:
Senden, durch den VNFM, einer Betriebsanweisung der virtuell Maschine an den NFVO, so dass der NFVO die Betriebsanweisung der virtuellen Maschine an einen VIM weiterleitet, um den VIM anzuweisen, den Laufstatus der virtuellen Zielmaschine einzustellen.

4. Verfahren nach einem der Ansprüche 1 bis 3, wobei die Informationen über die virtuelle Zielmaschine eine Anzahl von virtuellen Zielmaschinen und/oder eine Kennung der virtuellen Zielmaschine umfassen.

5. Verfahren nach einem der Ansprüche 1 bis 4, wobei, vor dem Empfang, durch den VNFM, einer durch den NFVO gesendeten Skalierungsanforderung für virtuelle Maschinen das Verfahren ferner Folgendes umfasst:
Empfangen, durch den VNFM, von Skalierungsmodusanzeigeinformationen, die durch den NFVO gesendet werden, wobei die Skalierungsmodusanzeigeinformationen verwendet werden, um anzuzeigen, dass ein Skalierungsmodus eine virtuelle Maschine ein- oder ausschaltet.

6. Virtuelle Verwaltungsvorrichtung, die Folgendes umfasst:
eine Erstellungseinheit (401), die zu Folgendem konfiguriert ist:
Erstellen eines virtualisierten Zielnetzwerkfunktions(VNF)-Knotens und Erstellen eines virtuellen Maschinen-Clusters für den Ziel-VNF-Knoten, wobei der virtuelle Maschinen-Cluster Q virtuelle Maschinen umfasst und Q eine ganze Zahl größer als oder gleich 1 ist;
eine Empfangseinheit (402), die konfiguriert ist, um eine Skalierungsanforderung für eine virtuelle Maschine zu empfangen, die durch einen Netzwerkfunktionsvirtualisierungsorchestrator (NFVO) gesendet wird, wobei die Skalierungsanforderung für virtuelle Maschinen eine Kennung des Ziel-VNF-Knotens, Informationen über eine virtuelle Zielmaschine und eine Statuskennung der virtuellen Maschine trägt und die Statuskennung der virtuellen Maschine eine Einschaltkennung oder eine Ausschaltkennung ist;
eine Bestimmungseinheit (403), die zu Folgendem konfiguriert ist:
Bestimmen des virtuellen Maschinen-Clusters des Ziel-VNF-Knotens basierend auf der Kennung des Ziel-VNF-Knotens und Bestimmen der virtuellen Zielmaschine in dem virtuellen Maschinen-Cluster basierend auf den Informationen über die virtuelle Zielmaschine; und
eine Einstelleinheit (404), die konfiguriert ist, um einen Laufstatus der virtuellen Zielmaschine basierend auf der Statuskennung der virtuellen Maschine einzustellen, wobei die virtuelle Zielmaschine auf einen Einschaltzustand gesetzt wird, wenn die Statuskennung der virtuellen Maschine eine Einschaltkennung ist, so dass der Ziel-VNF-Knoten aufskaliert wird, oder die virtuelle Zielmaschine auf einen Ausschaltzustand gesetzt wird, wenn die Statuskennung der virtuellen Maschine eine Ausschaltkennung ist, so dass der Ziel-VNF-Knoten abskaliert wird, wobei die Erstelleinheit (401) ferner zu Folgendem konfiguriert ist:
nachdem die Einstelleinheit (404) den Laufstatus der virtuellen Zielmaschine basierend auf der Statuskennung für virtuelle Maschinen einstellt, wenn Q kleiner als ein erster Schwellenwert und P/Q größer als ein zweiter Schwellenwert ist, Erstellen von M neuen virtuellen Maschinen für den Ziel-VNF-Knoten und Hinzufügen der M virtuellen Maschinen zu dem virtuellen Maschinen-Cluster, wobei P eine Anzahl von virtuellen Maschinen in einem Einschaltzustand in dem virtuellen Maschinen-Cluster ist und M größer als oder gleich 1 und kleiner als oder gleich einer Differenz zwischen dem ersten Schwellenwert und Q ist.

7. Virtueller Verwaltungsvorrichtung nach Anspruch 6, wobei die Einstelleinheit (404) speziell zu Folgendem konfiguriert ist:
Senden einer Anforderungsnachricht für den Ressourcenvorgang der virtuellen Maschine an den NFVO, wobei die Anforderungsnachricht für den Ressourcenvorgang der virtuellen Maschine die Informationen über die virtuelle Zielmaschine trägt;
Empfangen einer durch den NFVO gesendeten Zuweisungsnachricht für den Ressourcenvorgang der virtuellen Maschine, wobei die Zuweisungsnachricht für den Betrieb der virtuellen Maschine eine Bestätigungskennung trägt und die Bestätigungskennung verwendet wird, um anzuzeigen, dass der VNFM die Erlaubnis zum Betrieb der virtuellen Zielmaschine erhalten hat; und
Senden einer Betriebsanweisung der virtuellen Maschine an einen virtualisierten Infrastrukturmanager (VIM), um den VIM anzuweisen, den Laufstatus der virtuellen Zielmaschine einzustellen.

8. Virtuelle Verwaltungsvorrichtung nach Anspruch 6, wobei die Einstelleinheit (404) speziell konfiguriert ist, um eine Betriebsanweisung der virtuellen Maschine an den NFVO zu senden, so dass der NFVO die Betriebsanweisung der virtuellen Maschine an einen VIM weiterleitet, um den VIM anzuweisen, den Laufstatus der virtuellen Zielmaschine einzustellen.

9. Virtueller Verwaltungsvorrichtung nach einem der Ansprüche 6 bis 8, wobei die Informationen über die virtuelle Zielmaschine eine Anzahl von virtuellen Zielmaschinen und/oder eine Kennung der virtuellen Zielmaschine umfassen.

10. Virtuelle Verwaltungsvorrichtung nach einem der Ansprüche 6 bis 9, wobei die Empfangseinheit (402) ferner zu Folgendem konfiguriert ist:
bevor eine durch den NFVO gesendete Skalierungsanforderung der virtuellen Maschine empfangen wird, Empfangen von Skalierungsmodusanzeigeinformationen, wobei die Skalierungsmodusanzeigeinformationen verwendet werden, um anzuzeigen, dass ein Skalierungsmodus eine virtuelle Maschine ein- oder ausschaltet.

11. Virtuelle Verwaltungsvorrichtung nach einem der Ansprüche 6 bis 10, wobei die virtuelle Verwaltungsvorrichtung mindestens einen Prozessor (11, 14), einen Speicher (12) und eine Kommunikationsschnittstelle (13) umfassen kann, und der mindestens eine Prozessor mit dem Speicher und der Kommunikationsschnittstelle verbunden ist;
der Speicher (12) konfiguriert ist, um eine computerausführbare Anweisung zu speichern; und
der Prozessor (11, 14) konfiguriert ist, um die computerausführbare Anweisung zu lesen, um das Skalierungsverfahren für virtuelle Maschinen nach einem der Ansprüche 1 bis 5 zu implementieren.

## Revendications

1. Procédé de mise à l'échelle de machine virtuelle, comprenant :
la création (102), par un gestionnaire de fonctions virtualisées de réseau, VNFM, d'un nœud de fonction virtualisée de réseau, VNF, cible et la création d'un groupe de machines virtuelles pour le nœud de VNF cible, le groupe de machines virtuelles comprenant Q machines virtuelles et Q représentant un nombre entier supérieur ou égal à 1 ;
la réception, par le VNFM, d'une demande de mise à l'échelle de machine virtuelle envoyée par un orchestrateur de virtualisation de fonction réseau, NFVO, la demande de mise à l'échelle de machine virtuelle portant un identifiant du nœud de VNF cible, des informations concernant une machine virtuelle cible et un identifiant d'état de machine virtuelle et l'identifiant d'état de la machine virtuelle étant un identifiant de mise sous tension ou un identifiant de mise hors tension ;
la détermination (104), par le VNFM, du groupe de machines virtuelles du nœud de VNF cible, sur la base de l'identifiant du nœud de VNF cible, et la détermination de la machine virtuelle cible dans le groupe de machines virtuelles, sur la base des informations concernant la machine virtuelle cible ; et
le réglage (105), par le VNFM, d'un état de fonctionnement de la machine virtuelle cible sur la base de l'identifiant d'état de machine virtuelle, la machine virtuelle cible étant réglée à un mode sous tension si l'identifiant d'état de machine virtuelle est un identifiant de mise sous tension, de façon à mettre à l'échelle le nœud de VNF cible, ou la machine virtuelle cible étant réglée à un mode hors tension si l'identifiant d'état de machine virtuelle est un identifiant de mise hors tension, de façon à mettre à l'échelle le nœud de VNF cible, le procédé comprenant en outre, après le réglage (105), par le VNFM, d'un état de fonctionnement de la machine virtuelle cible sur la base de l'identifiant d'état de machine virtuelle :
la création, par le VNFM, si Q est inférieur à un premier seuil et que P/Q est supérieur à un second seuil, de M nouvelles machines virtuelles pour le nœud de VNF cible, P représentant un nombre de machines virtuelles dans un mode sous tension dans le groupe de machines virtuelles et M étant supérieur ou égal à 1 et inférieur ou égal à une différence entre le premier seuil et Q ; et
l'ajout, par le VNFM, des M machines virtuelles au groupe de machines virtuelles.

2. Procédé selon la revendication 1, selon lequel le réglage (105), par le VNFM, d'un état de fonctionnement de la machine virtuelle cible sur la base de l'identifiant d'état de machine virtuelle comprend :
l'envoi, par le VNFM, d'un message de demande d'opération sur une ressource de machine virtuelle au NFVO, le message de demande d'opération sur une ressource de machine virtuelle contenant les informations concernant la machine virtuelle cible ;
la réception, par le VNFM, d'un message d'autorisation d'opération sur une ressource de machine virtuelle envoyé par le NFVO, le message d'autorisation d'opération sur une ressource de machine virtuelle contenant un identifiant d'accusé de réception et l'identifiant d'accusé de réception étant utilisé pour indiquer que le VNFM a obtenu l'autorisation d'activer la machine virtuelle cible ; et
l'envoi, par le VNFM, d'une instruction d'opération de machine virtuelle à un gestionnaire d'infrastructure virtualisé, VIM, pour demander au VIM de régler l'état de fonctionnement de la machine virtuelle cible.

3. Procédé selon la revendication 1, selon lequel le réglage (105), par le VNFM, d'un état de fonctionnement de la machine virtuelle cible sur la base de l'identifiant d'état de machine virtuelle comprend :
l'envoi, par le VNFM, d'une instruction d'opération de machine virtuelle au NFVO, afin que le NFVO transmette l'instruction d'opération de machine virtuelle à un VIM, pour demander au VIM de régler l'état de fonctionnement de la machine virtuelle cible.

4. Procédé selon l'une quelconque des revendications 1 à 3, selon lequel les informations concernant la machine virtuelle cible comprennent un nombre de machines virtuelles cibles ou un identifiant de la machine virtuelle cible ou les deux.

5. Procédé selon l'une quelconque des revendications 1 à 4, le procédé comprenant en outre, avant la réception, par le VNFM, d'une demande de mise à l'échelle de machine virtuelle envoyée par le NFVO :
la réception, par le VNFM, d'informations d'indication de mode de mise à l'échelle envoyées par le NFVO, les informations d'indication de mode de mise à l'échelle étant utilisées pour indiquer qu'un mode de mise à l'échelle met une machine virtuelle sous tension ou hors tension.

6. Dispositif de gestion virtuelle, comprenant :
une unité de création (401) configurée :
pour créer une fonction de réseau virtualisée cible, nœud de VNF, et pour créer un groupe de machines virtuelles pour le nœud de VNF cible, le groupe de machines virtuelles comprenant Q machines virtuelles et Q représentant un nombre entier supérieur ou égal à 1 ;
une unité de réception (402) configurée pour recevoir une demande de mise à l'échelle de machine virtuelle envoyée par un orchestrateur de virtualisation de fonction réseau, NFVO, la demande de mise à l'échelle de machine virtuelle portant un identifiant du nœud de VNF cible, des informations concernant une machine virtuelle cible et un identifiant d'état de machine virtuelle et l'identifiant d'état de la machine virtuelle étant un identifiant de mise sous tension ou un identifiant de mise hors tension ;
une unité de détermination (403) configurée :
pour déterminer le groupe de machines virtuelles du nœud de VNF cible, sur la base de l'identifiant du nœud de VNF cible, et pour déterminer la machine virtuelle cible dans le groupe de machines virtuelles, sur la base des informations concernant la machine virtuelle cible ; et
une unité de réglage (404), configurée pour régler un état de fonctionnement de la machine virtuelle cible sur la base de l'identifiant d'état de machine virtuelle, la machine virtuelle cible étant réglée à un mode sous tension si l'identifiant d'état de machine virtuelle est un identifiant de mise sous tension, de façon à mettre à l'échelle le nœud de VNF cible ou la machine virtuelle cible étant réglée à un mode hors tension si l'identifiant d'état de machine virtuelle est un identifiant de mise hors tension, de façon à mettre à l'échelle le nœud de VNF cible, l'unité de création (401) étant en outre configurée :
pour créer M nouvelles machines virtuelles pour le nœud de VNF cible après le réglage, par l'unité de réglage (404), de l'état de fonctionnement de la machine virtuelle cible sur la base de l'identifiant d'état de machine virtuelle, si Q est inférieur à un premier seuil et que P/Q est supérieur à un second seuil, et pour ajouter les M machines virtuelles au groupe de machines virtuelles, P représentant un nombre de machines virtuelles dans un mode sous tension dans le groupe de machines virtuelles et M étant supérieur ou égal à 1 et inférieur ou égal à une différence entre le premier seuil et Q.

7. Dispositif de gestion virtuelle selon la revendication 6, dans lequel l'unité de réglage (404) est spécifiquement configurée :
pour envoyer un message de demande d'opération sur une ressource de machine virtuelle au NFVO, le message de demande d'opération sur une ressource de machine virtuelle contenant les informations concernant la machine virtuelle cible ;
pour recevoir un message d'autorisation d'opération sur une ressource de machine virtuelle envoyé par le NFVO, le message d'autorisation d'opération de machine virtuelle contenant un identifiant d'accusé de réception et l'identifiant d'accusé de réception étant utilisé pour indiquer que le VNFM a obtenu l'autorisation d'activer la machine virtuelle cible ; et
pour envoyer une instruction d'opération de machine virtuelle à un gestionnaire d'infrastructure virtualisé, VIM, pour ordonner au VIM de régler l'état de fonctionnement de la machine virtuelle cible.

8. Dispositif de gestion virtuelle selon la revendication 6, dans lequel l'unité de réglage (404) est spécifiquement configurée pour envoyer une instruction d'opération de machine virtuelle au NFVO, afin que le NFVO transmette l'instruction d'opération de machine virtuelle à un VIM, pour ordonner au VIM de régler l'état de fonctionnement de la machine virtuelle cible.

9. Dispositif de gestion virtuelle selon l'une quelconque des revendications 6 à 8, dans lequel les informations concernant la machine virtuelle cible comprennent un nombre de machines virtuelles cibles ou un identifiant de la machine virtuelle cible ou les deux.

10. Dispositif de gestion virtuelle selon l'une quelconque des revendications 6 à 9, dans lequel l'unité de réception (402) est en outre configurée :
pour recevoir des informations d'indication de mode de mise à l'échelle avant la réception d'une demande de mise à l'échelle de machine virtuelle envoyée par le NFVO, les informations d'indication de mode de mise à l'échelle étant utilisées pour indiquer qu'un mode de mise à l'échelle met une machine virtuelle sous tension ou hors tension.

11. Dispositif de gestion virtuelle selon l'une quelconque des revendications 6 à 10, le dispositif de gestion virtuelle pouvant comprendre au moins un processeur (11, 14), une mémoire (12) et une interface de communication (13), tandis que l'au moins un le processeur est connecté à la mémoire et à l'interface de communication ;
la mémoire (12) étant configurée pour stocker une instruction exécutable par ordinateur ; et
le processeur (11, 14) étant configuré pour lire l'instruction exécutable par ordinateur afin de mettre en œuvre le procédé de mise à l'échelle de machine virtuelle selon l'une quelconque des revendications 1 à 5.
